# EUROPEAN PATENT APPLICATION

(11) **EP 4 751 914 A1**
(43) Date of publication of application: **03.06.2026**
(21) Application number: 24923279.4
(22) Date of filing: 30.08.2024
(51) Int. Cl.: B32B 27/40, G09F 9/30, H05K 5/03

(54) **COVER PLATE AND ELECTRONIC DEVICE**

(30) Priority: 06.02.2024 CN 202420288054 U
(71) Applicant: HUAWEI TECHNOLOGIES CO., LTD., Shenzhen 518129 (CN)
(72) Inventor: WANG, Zheng, Shenzhen, Guangdong 518129 (CN); WANG, Huan, Shenzhen, Guangdong 518129 (CN); YUAN, Hang, Shenzhen, Guangdong 518129 (CN); LIN, Hongfan, Shenzhen, Guangdong 518129 (CN); PU, Qilong, Shenzhen, Guangdong 518129 (CN)
(74) Representative: MERH-IP Matias Erny Reichl Hoffmann Patentanwälte PartG mbB
(86) International application number: PCT/CN2024/115850
(87) International publication number: WO 2025/167069

(57) **Abstract**

In the field of terminal device technologies, a cover plate (10) and an electronic device (1000) are disclosed. The cover plate (10) includes: a support layer (2), where the support layer (2) has a first area (201) and a second area (202), the first area (201) and the second area (202) are disposed adjacent to each other, the support layer (2) corresponding to the first area (201) includes at least a reinforcement plate (22), and impact resistance strength of the reinforcement plate (22) is greater than or equal to 100 Kg/cm; and a flexible layer (1), where the flexible layer (1) is disposed on an outer surface of the support layer (2). The reinforcement plate (22) with high impact resistance strength is used to locally reinforce the support layer (2). Because the flexible layer (1) is disposed on the outer surface of the support layer (2), the locally reinforced reinforcement plate (22) can increase puncture strength of the cover plate (10), to ensure that the cover plate (10) can meet a requirement of protecting an internal component of the electronic device (1000); and can avoid problems such as an indentation occurring on a surface of the flexible layer (1) caused by local stress generated by the support layer (2) on the flexible layer (1) in a procedure of preparing the cover plate (10) by performing hot press bonding on the support layer (2) and the flexible layer (1), to ensure aesthetics of an outer surface of the cover plate (10).

## Description

This application claims priority to Chinese Patent Application No. 202420288054.1, filed with the China National Intellectual Property Administration on February 6, 2024 and entitled "COVER PLATE AND ELECTRONIC DEVICE", which is incorporated herein by reference in its entirety.

### TECHNICAL FIELD

This application relates to the field of cover plate technologies, and specifically, to a cover plate and an electronic device.

### BACKGROUND

With continuous development of consumer electronic products, people have increasingly high quality requirements for appearance and thickness of the consumer electronic products. For example, in a continuous development process of a cover plate, to highlight high quality of an electronic device, a manufacturer of the electronic device needs to thin the cover plate. However, merely thinning the cover plate cannot meet a requirement of protecting an internal component of an electronic product. To resolve the foregoing problem, suppliers thin the cover plate and locally thicken the cover plate, so that the cover plate can meet the requirement of protecting the internal component of the electronic product. However, local thickening causes an indentation occurring on an outer surface of the cover plate, failing to meet a visual aesthetic requirement of the electronic product.

### SUMMARY

In view of this, this application provides a cover plate and an electronic device. The cover plate can meet a requirement of protecting an internal component of the electronic device, and has visual aesthetics.

According to a first aspect of this application, a cover plate is provided. The cover plate includes: a support layer, where the support layer has a first area and a second area, the first area and the second area are disposed adjacent to each other, the support layer corresponding to the first area includes at least a reinforcement plate, and impact resistance strength of the reinforcement plate is greater than or equal to 100 Kg/cm; and a flexible layer, where the flexible layer is disposed on an outer surface of the support layer.

In this solution, the outer surface of the support layer is a surface that is directly in contact with a finger of a user when the user touches the cover plate of an electronic device. An inner surface of the support layer is disposed opposite to the outer surface of the support layer. The cover plate in this application includes the support layer and the flexible layer. The support layer corresponding to the first area includes at least the reinforcement plate. To be specific, an area that is of the support layer and that corresponds to the reinforcement plate is the first area, and an area that is of the support layer and that does not correspond to the reinforcement plate is the second area. Impact resistance strength of the reinforcement plate is greater than or equal to 100 Kg/cm, and may be specifically 100 Kg/cm, 110 Kg/cm, 120 Kg/cm, 130 Kg/cm, 150 Kg/cm, 160 Kg/cm, 180 Kg/cm, 200 Kg/cm, or the like. In this application, the reinforcement plate with high impact resistance strength is used to locally reinforce the support layer. Because the flexible layer is disposed on the outer surface of the support layer, the locally reinforced reinforcement plate can increase puncture strength of the cover plate, to ensure that the cover plate can meet a requirement of protecting an internal component of the electronic device; and can avoid problems such as an indentation occurring on a surface of the flexible layer caused by local stress generated by the support layer on the flexible layer in a procedure of preparing the cover plate by performing hot press bonding on the support layer and the flexible layer, to ensure aesthetics of an outer surface of the cover plate.

In a feasible implementation, the support layer further includes a fiberglass substrate, the fiberglass substrate corresponds to the first area and the second area, a thickness of the support layer corresponding to the first area is greater than a thickness of the support layer corresponding to the second area, and the reinforcement plate is located on a side that is of the fiberglass substrate and that is away from the flexible layer.

The reinforcement plate and the flexible layer are respectively located on two sides of the fiberglass substrate. The fiberglass substrate has advantages such as flame retardancy, drop resistance, corrosion resistance, high mechanical strength, and lightness and thinness. The cover plate is locally reinforced by externally attaching the reinforcement plate, to improve a puncture resistance capability of the cover plate. In addition, the impact resistance strength of the reinforcement plate is greater than or equal to 100 Kg/cm, so that no large local stress is generated on the flexible layer in a procedure of performing hot press bonding on the support layer and the flexible layer. This reduces a possibility of an indentation occurring on the outer surface of the flexible layer, thereby improving appearance quality of the cover plate.

In a feasible implementation, a bonding layer is further disposed between the reinforcement plate and the fiberglass substrate.

An optical adhesive may be coated on the side that is of the fiberglass substrate and that is away from the flexible board, and then the reinforcement plate is disposed on a surface of the optical adhesive. The bonding layer disposed between the fiberglass substrate and the reinforcement plate is obtained through curing. The optical adhesive is organic silicon resin, polyurethane resin, polyacrylate resin, epoxy resin, or the like. Existence of the bonding layer enables the fiberglass substrate to be closely attached to the reinforcement plate, to improve a puncture resistance capability and a service life of the cover plate.

In a feasible implementation, the support layer further includes a fiberglass substrate, the fiberglass substrate corresponds to the first area and the second area, the fiberglass substrate includes at least two fiberglass sublayers that are stacked, the reinforcement plate is embedded in any one of the fiberglass sublayers, and a thickness of the support layer corresponding to the first area is equal to a thickness of the support layer corresponding to the second area.

At least two fiberglass sublayers may be first prepared, where the fiberglass sublayer is prepared as fiberglass prepreg by mixing fiberglass, resin, and the like, and then the fiberglass prepreg is punched into sheets of a preset size of the cover plate, to obtain the fiberglass sublayers. A groove of a preset shape of the reinforcement plate is disposed in the first area of any fiberglass sublayer, the reinforcement plate is embedded in the groove, then, the at least two fiberglass sublayers are stacked, and hot pressing is performed, to obtain the support layer. The cover plate is prepared by embedding the reinforcement plate, and the thickness of the support layer in the first area is the same as that in the second area, so that the puncture resistance capability of the cover plate is improved while local stress generated by the reinforcement plate on the flexible board in a hot pressing procedure is avoided. This improves the service life and appearance quality of the cover plate.

In a feasible implementation, there is at least one reinforcement plate, and a maximum of one reinforcement plate is embedded in the any one of the fiberglass sublayers.

In this application, the reinforcement plate may be embedded in one of at least two stacked fiberglass sublayers, or the reinforcement plate may be embedded in all the fiberglass sublayers, to improve impact resistance performance of the cover plate as much as possible.

In a feasible implementation, the fiberglass substrate includes at least two fiberglass sublayers that are stacked, the reinforcement plate includes a first reinforcement plate and a second reinforcement plate, the first reinforcement plate is embedded in any one of the fiberglass sublayers, and the second reinforcement plate is located on the side that is of the fiberglass substrate and that is away from the flexible layer.

In this application, the reinforcement plate may be disposed on the fiberglass substrate in both an external attachment manner and an embedding manner, to further improve the puncture resistance capability of the cover plate. It may be understood that when the reinforcement plate is disposed on the fiberglass substrate in both the external attachment manner and the embedding manner, a location of the externally attached reinforcement plate may correspond to a location of the embedded reinforcement plate, or the externally attached reinforcement plate and the embedded reinforcement plate may be disposed in a staggered manner.

In a feasible implementation, there is at least one first reinforcement plate, and a maximum of one reinforcement plate is embedded in the any one of the fiberglass sublayers; and there is one second reinforcement plate.

The support layer in this application includes the at least two stacked fiberglass sublayers. The first reinforcement plate may be embedded in any one of the fiberglass sublayers, or the first reinforcement plate may be embedded in a plurality of fiberglass sublayers, provided that one first reinforcement plate is disposed in one fiberglass sublayer. Because the second reinforcement plate is disposed on a side of the fiberglass substrate, disposing the second reinforcement plate increases a thickness of the cover plate, that is, there is one second reinforcement plate. In this application, a quantity of the reinforcement plates may be set based on an impact resistance requirement and a strength requirement of the cover plate.

In a feasible implementation, the reinforcement plate is selected from a polyimide layer or a polyethylene layer, and a molecular weight of polyethylene in the polyethylene layer is greater than or equal to 1.5 million.

Polyimide (PI) is a polymer of imide monomer including two acyl groups bonded to nitrogen. Polyimide has high-temperature stability, high mechanical performance, and excellent chemical resistance. As a local reinforcement layer, polyimide can be used to reduce pressure on the cover plate in a lamination process while improving appearance quality of the flexible layer. In addition, as an insulation material, polyimide can be used to reduce impact of an external environment on an internal component of the electronic device. Polyethylene whose molecular weight is greater than or equal to 1.5 million is ultra-high molecular weight polyethylene (ultra-high molecular weight polyethylene, UHMWPE). The ultra-high molecular weight polyethylene has a high impact absorption capability and excellent impact resistance strength, and the ultra-high molecular weight polyethylene has good wear resistance and a small friction coefficient, and can effectively improve mechanical performance of the cover plate.

In a feasible implementation, a thickness of the reinforcement plate ranges from 0.02 mm to 0.1 mm.

Specifically, the thickness of the reinforcement plate may be 0.02 mm, 0.03 mm, 0.04 mm, 0.05 mm, 0.06 mm, 0.07 mm, 0.08 mm, 0.09 mm, 0.1 mm, or the like. An excessively large thickness of the reinforcement plate is not conducive to lightness and thinness of the cover plate, and an excessively small thickness of the reinforcement plate is not conducive to improvement of impact resistance performance of the cover plate. In some embodiments, the thickness of the reinforcement plate ranges from 0.03 mm to 0.08 mm.

In a feasible implementation, a thickness of the cover plate corresponding to the first area is less than or equal to 0.8 mm.

The cover plate corresponding to the first area includes the flexible layer, the fiberglass substrate, and the reinforcement plate. The thickness of the cover plate corresponding to the first area is a sum of a thickness of the flexible layer corresponding to the first area, a thickness of the fiberglass substrate corresponding to the first area, and a thickness of the reinforcement plate corresponding to the first area. In this application, the cover plate is thin, so that the cover plate can have high mechanical performance while the cover plate is light and thin.

In a feasible implementation, a thickness of the cover plate corresponding to the second area is less than or equal to 0.7 mm.

Specifically, the thickness of the cover plate corresponding to the second area may be 0.3 mm, 0.4 mm, 0.5 mm, 0.6 mm, 0.7 mm, or the like. The cover plate corresponding to the second area includes the flexible layer and the fiberglass substrate. The thickness of the cover plate corresponding to the second area is a sum of a thickness of the flexible layer corresponding to the second area and a thickness of the fiberglass substrate corresponding to the second area. An excessively large thickness of the cover plate corresponding to the second area is not conducive to lightness and thinness of the cover plate, and an excessively small thickness of the reinforcement plate is not conducive to improvement of mechanical performance of the cover plate. In some embodiments, the thickness of the cover plate corresponding to the second area ranges from 0.2 mm to 0.5 mm. In some other embodiments, the thickness of the cover plate corresponding to the second area ranges from 0.3 mm to 0.4 mm.

In a feasible implementation, the flexible layer is selected from a polyurethane layer.

A polyurethane material is soft in texture, has good toughness, and has a waterproof function. In addition, the polyurethane material has rich colors and various patterns. Applying the polyurethane layer to the outer surface of the support layer can improve anti-drop performance and waterproof effect of the cover plate, and can further improve texture of the cover plate.

In a feasible implementation, a thickness of the polyurethane layer ranges from 0.1 mm to 0.4 mm.

Specifically, the thickness of the polyurethane layer may be 0.1 mm, 0.2 mm, 0.3 mm, 0.4 mm, or the like. An excessively large thickness of the polyurethane layer is not conducive to lightness and thinness of the cover plate, and an excessively small thickness of the polyurethane layer reduces drop resistance performance of the cover plate.

In a feasible implementation, the flexible layer includes at least one protective layer, the protective layer includes a first layer and a second layer that are stacked, the first layer is disposed between the second layer and the support layer, the first layer is selected from an acrylic layer, and the second layer is selected from the polyurethane layer.

Compared with the first layer, the second layer is closer to the outer surface of the cover plate. The second layer is selected from the polyurethane layer. The polyurethane material is soft in texture, has good toughness, and has a waterproof function, and the polyurethane material has rich colors and various patterns. Applying the polyurethane layer to the outer surface of the support layer can improve the anti-drop performance and the waterproof effect of the cover plate, and can further improve the texture of the cover plate. The first layer is selected from the acrylic layer. An acrylic material has excellent strength, weather resistance, and impact resistance, and can improve mechanical performance of the cover plate.

In a feasible implementation, a thickness of the first layer ranges from 0.05 mm to 0.1 mm, and/or a thickness of the second layer ranges from 0.05 mm to 0.1 mm.

Specifically, the thickness of the first layer may be 0.05 mm, 0.06 mm, 0.07 mm, 0.08 mm, 0.09 mm, 0.1 mm, or the like. The thin first layer helps improve mechanical performance of the cover plate and facilitates lightness and thinness of the cover plate. Specifically, the thickness of the second layer may be 0.05 mm, 0.06 mm, 0.07 mm, 0.08 mm, 0.09 mm, 0.1 mm, or the like. The thin second layer helps improve mechanical performance and appearance performance of the cover plate and facilitates lightness and thinness of the cover plate.

In a feasible implementation, the cover plate further includes a protective film, the protective film is disposed on a side that is of the flexible layer and that is away from the support layer, and the protective film is selected from a polyurethane film.

The polyurethane film has good elasticity, a small thickness, and a waterproof function, and can protect the cover plate to some extent. In addition, the polyurethane film has a specific texture structure or color, to improve the texture of the cover plate.

According to a second aspect, this application provides an electronic device. The electronic device includes a housing and a cover plate disposed on a surface of the housing, and the cover plate includes the cover plate according to the first aspect.

The electronic device provided in this application includes the cover plate described above, so that the electronic device has excellent mechanical performance and appearance quality.

The cover plate provided in embodiments of this application can ensure that the cover plate is thin while maintaining specific structural strength, and can also meet an aesthetic requirement of the cover plate. The electronic device using the cover plate has advantages of drop-resistant, beautiful, and light and thin, and can significantly improve and enhance user experience.

### BRIEF DESCRIPTION OF DRAWINGS

FIG. 1 is a main view of a cover plate in a related technology;
FIG. 2 is a top view of a cover plate in a related technology;
FIG. 3 is a diagram of a structure of a mobile phone according to an embodiment of this application;
FIG. 4 is an exploded view 1 of the mobile phone shown in FIG. 3;
FIG. 5 is an exploded view 2 of the mobile phone shown in FIG. 3;
FIG. 6 is a diagram of a cross section A-A of a rear cover in FIG. 4;
FIG. 7 is a diagram of a cross section A-A of a rear cover in FIG. 5;
FIG. 8 is a diagram of a structure of a cover plate according to Embodiment 1 of this application;
FIG. 9 is a diagram of a structure in which a flexible layer is a single layer according to Embodiment 1 of this application;
FIG. 10 is a diagram of a structure in which a flexible layer is a plurality of layers according to Embodiment 1 of this application;
FIG. 11 is a diagram of a structure of a flexible layer that includes two stacked protective layers according to Embodiment 1 of this application;
FIG. 12 is a diagram of a structure of a support layer according to Embodiment 1 of this application;
FIG. 13 is a diagram of a structure of a fiberglass substrate that includes four fiberglass sublayers according to Embodiment 1 of this application;
FIG. 14(a) to FIG. 14(d) are a flowchart of preparing a cover plate according to Embodiment 1 of this application;
FIG. 15 is a diagram of a structure of a cover plate according to Embodiment 2 of this application;
FIG. 16 is a diagram of a structure in which a reinforcement plate is embedded in a fiberglass sublayer that is not in contact with a flexible layer according to Embodiment 2 of this application;
FIG. 17 is a diagram of a structure in which orthographic projections of two reinforcement plates on a flexible layer completely overlap according to Embodiment 2 of this application;
FIG. 18 is a diagram of a structure in which orthographic projections of two reinforcement plates on a flexible layer completely do not overlap according to Embodiment 2 of this application;
FIG. 19(a) to FIG. 19(f) are a flowchart of preparing a cover plate according to Embodiment 2 of this application;
FIG. 20 is a diagram of a structure of a cover plate according to Embodiment 3 of this application;
FIG. 21 is a diagram of a structure in which an orthographic projection of a first reinforcement plate on a flexible layer completely does not overlap an orthographic projection of a second reinforcement plate on the flexible layer according to Embodiment 3 of this application; and
FIG. 22(a) to FIG. 22(h) are a flowchart of preparing a cover plate according to Embodiment 3 of this application.

### DESCRIPTION OF EMBODIMENTS

In descriptions of implementations of this application, it should be understood that directions or location relationships indicated by terms such as "length", "thickness", "up", "down", "front", "back", "left", "right", "top", "bottom", "inside", and "outside" are directions or location relationships that are shown based on the accompanying drawings, and are merely intended to facilitate the descriptions of implementations of this application and simplify the descriptions, but are not intended to indicate or imply that an indicated apparatus or component needs to have a specific orientation or needs to be constructed and operated in a specific orientation, and therefore cannot be understood as a limitation on implementations of this application. In addition, the terms "first" and "second" are merely intended for a purpose of description, and shall not be understood as an indication or implication of relative importance or an implicit indication of a quantity of indicated technical features. Therefore, a feature limited by "first" or "second" may explicitly or implicitly include one or more features. In the descriptions of implementations of this application, "a plurality of" means two or more, unless otherwise precisely and specifically specified.

In the descriptions of implementations of this application, it should be noted that, unless otherwise specified and limited, the term "connection" should be understood in a broad sense. For example, the connection may be a fastened connection, a detachable connection, or an integrated connection. Alternatively, the connection may be a mechanical connection or an electrical connection, or may mean mutual communication. Alternatively, the connection may be a direct connection, or an indirect connection through an intermediate medium, or may be internal communication between two elements or an interaction relationship between two elements. A person of ordinary skill in the art may understand specific meanings of the foregoing terms in implementations of this application based on specific cases.

The following further describes some embodiments of this application in detail with reference to the accompanying drawings of this specification.

In a related technology, a cover plate is prepared by using a fiberglass board. Generally, a flexible material layer like silicone gel or leather is disposed on a side of the fiberglass board. Disposing the flexible material layer can improve elasticity of the cover plate, to protect the electronic device from a risk of dropping or scratching. In addition, the flexible material layer is soft and has delicate leather-like touch, to improve texture of the cover plate. With a development trend of thinning an entire electronic device, people have a higher requirement on the cover plate. The cover plate needs to be thinned while protecting an internal component of the electronic device.

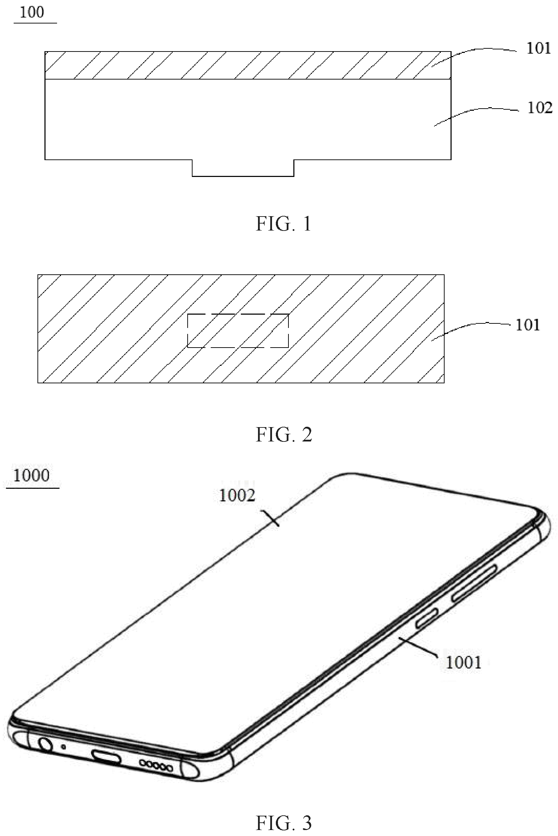

To resolve the foregoing problem, the cover plate is usually prepared by locally thickening the fiberglass board. In this way, dual requirements of protecting an internal component and thinning the cover plate can be met. FIG. 1 is a front view of a cover plate in a related technology. A first cover plate 100 includes a flexible material layer 101 and a fiberglass board 102. There is a local thickening structure on a side that is of the fiberglass board 102 and that is away from the flexible material layer 101. In an actual preparation process of the first cover plate 100, the locally thickened fiberglass board 102 usually needs to be prepared first, and then the flexible material layer 101 is bonded to a surface of the fiberglass board 102 by using a hot press bonding process. In a hot press bonding procedure, the locally thickened fiberglass board 102 generates local stress on the surface of the flexible material layer 101, causing an indentation occurring on an outer surface of the flexible material layer 101. FIG. 2 is a top view of the first cover plate 100. It can be learned from FIG. 2 that there is the indentation on the surface of the flexible material layer 101 (shown by a dashed line in FIG. 2), causing poor appearance of the cover plate and affecting texture of the cover plate.

In this case, to ensure that the cover plate has good mechanical performance, is thin, and has decorative texture, this application provides a cover plate 10. The cover plate 10 may be used in an electronic device 1000. The electronic device 1000 may be a mobile phone, a tablet computer, an e-reader, a notebook computer, a digital camera, a television, a wearable device, a virtual reality (virtual reality, VR) terminal device, an augmented reality (augmented reality, AR) terminal device, or the like.

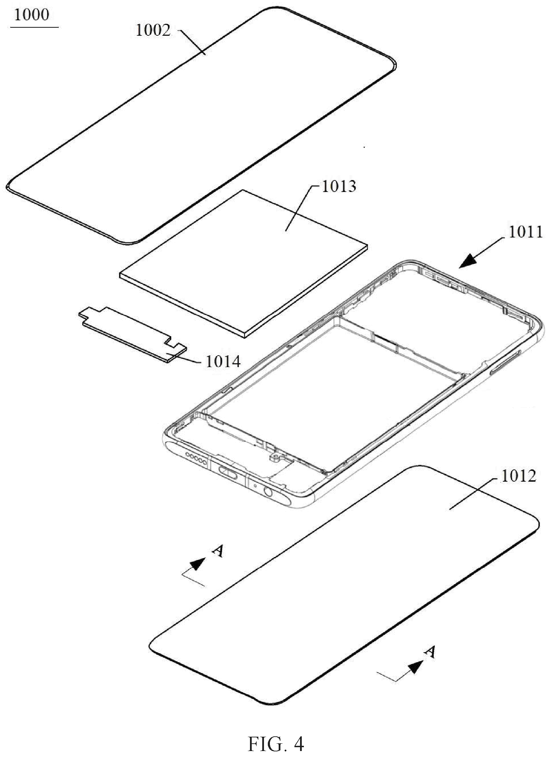

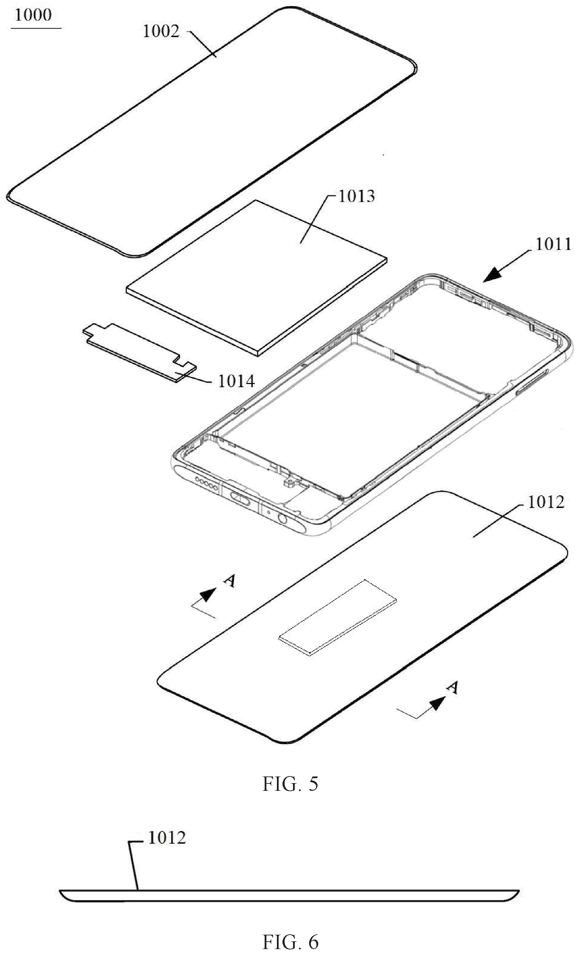

In embodiments of this application, an example in which the mobile phone is the electronic device 1000 is used for description. FIG. 3 is a diagram of a structure in which the electronic device 1000 is the mobile phone. FIG. 4 is an exploded view 1 of the electronic device 1000, and FIG. 5 is an exploded view 2 of the electronic device 1000.

The electronic device 1000 includes a housing 1001 and a display 1002. The display 1002 is mounted on the housing 1001. Specifically, the housing 1001 includes a frame 1011 and a rear cover 1012. The frame 1011 surrounds an outer periphery of the display 1002 and surrounds an outer periphery of the rear cover 1012. The display 1002 and the rear cover 1012 are spaced apart, and the rear cover 1012 and the display 1002 are respectively located on two sides of the frame 1011. A cavity formed between the display 1002, the frame 1011, and the rear cover 1012 is configured to place electronic components such as a mainboard 1013 and a battery 1014. If the housing 1001 is separated from the display 1002, an electronic component located inside the electronic device 1000 may be observed.

In this application, the rear cover 1012 has an inner surface and an outer surface that are disposed opposite to each other. The outer surface of the rear cover is a surface that is in direct contact with a finger of a user when the user touches the mobile phone.

FIG. 6 is a diagram of a cross section A-A of the rear cover 1012 in FIG. 4. As shown in FIG. 4 and FIG. 6, a central area of the rear cover 1012 may be considered as a planar housing with a thickness, the inner surface of the rear cover 1012 is a flat surface, and a chamfer or a curved surface angle is provided on only an edge of the rear cover 1012.

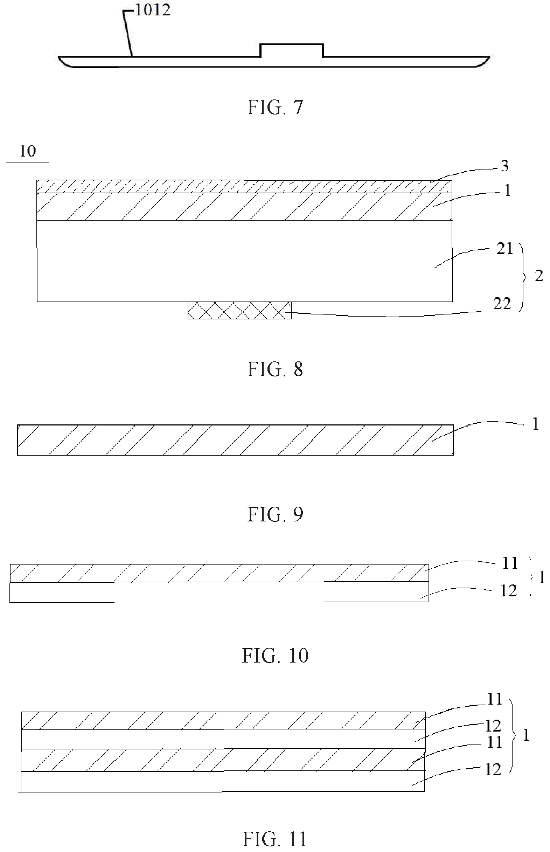

FIG. 7 is a diagram of a cross section A-A of the rear cover 1012 in FIG. 5. A central area of the rear cover 1012 in FIG. 5 may be considered as a planar housing with a thickness, and there is a protrusion structure in a local area on the rear cover 1012, that is, the inner surface of the rear cover 1012 is a non-flat surface. A chamfer or a curved surface angle is provided on an edge of the rear cover 1012.

### Embodiment 1

FIG. 8 is a diagram of a structure of the cover plate 10 according to Embodiment 1 of this application. The cover plate 10 includes a flexible layer 1 and a support layer 2 that are stacked. The flexible layer 1 has an inner surface and an outer surface. The outer surface of the flexible layer 1 is a surface that is in direct contact with a finger of a user when the user touches the mobile phone. The inner surface of the flexible layer 1 is disposed opposite to the outer surface. The support layer 2 is disposed on the inner surface of the flexible layer 1. The support layer 2 serves as a support body of the cover plate, and is configured to ensure mechanical performance of the cover plate. The flexible layer 1 is configured to provide excellent appearance texture. The flexible layer 1 and the support layer 2 cooperate with each other to improve appearance effect and a service life of the electronic device 1000.

In a preparation process of the cover plate in this application, the support layer 2 and the flexible layer 1 are combined by using a hot press bonding process, to obtain the cover plate.

The flexible layer 1 is a layer structure with specific flexibility and surface texture. In some embodiments, FIG. 9 is a diagram of a structure of the flexible layer. The flexible layer 1 is a single-layer structure, and the flexible layer 1 is selected from a polyurethane (full name: polyurethane, PU) layer. The polyurethane layer can provide a soft outer surface with specific texture for the cover plate, so that drop resistance and aesthetics of the cover plate are improved. In another embodiment, FIG. 10 is a diagram of another structure of the flexible layer. The flexible layer 1 is a laminated structure, the flexible layer 1 includes a protective layer, and the protective layer includes a second layer 11 and a first layer 12 that are stacked. The first layer 12 is selected from an acrylic layer, the second layer 11 is selected from a polyurethane layer, and the first layer 12 is located between the second layer 11 and the support layer 2. The acrylic layer has excellent strength, weather resistance, and impact resistance, so that mechanical performance of the cover plate can be improved. The polyurethane layer can provide a soft outer surface with specific texture for the cover plate, so that drop resistance and aesthetics of the cover plate are improved. The polyurethane layer and the acrylic layer cooperate with each other to improve mechanical performance, texture, and drop resistance of the cover plate.

Still refer to FIG. 10. When the flexible layer 1 in this application includes the laminated structure, the flexible layer 1 may be a single protective layer. Alternatively, the flexible layer may be obtained by stacking a plurality of protective layers. For example, FIG. 11 is a diagram of a structure of the flexible layer that includes two protective layers that are stacked. The flexible layer 1 includes a second layer 11, a first layer 12, a second layer 11, and a first layer 12 that are sequentially stacked from top to bottom. A surface on which the second layer 11 is located is the outer surface of the flexible layer 1, so that an outer surface of the cover plate has excellent softness and leather texture. This can reduce a risk of damage or scratching caused by a drop of the electronic device 1000. It may be understood that a person skilled in the art may set a quantity of protective layers to two layers, three layers, four layers, or the like as required based on a thickness requirement of the cover plate 10.

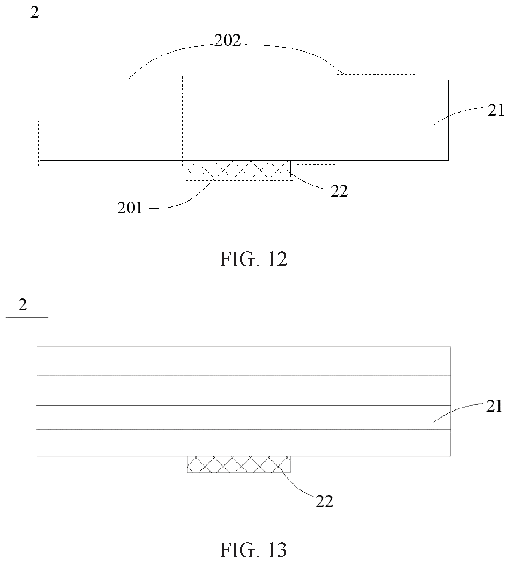

FIG. 12 is a diagram of a structure of the support layer. The support layer 2 has a first area 201 and a second area 202. The first area 201 and the second area 202 are disposed adjacent to each other. The first area 201 is an area that needs to be locally reinforced on the support layer 2. A reinforcement plate 22 is disposed on the support layer 2 corresponding to the first area 201, and correspondingly, no reinforcement plate 22 is disposed on the support layer 2 corresponding to the second area 202. It may be understood that the first area 201 and the second area 202 of the support layer 2 in this application may be obtained through division based on whether there is the reinforcement plate 22. Alternatively, an area that needs to be locally reinforced may be preset as the first area 201 by performing a simulation experiment on the support plate 2, and an area of the support layer 2 other than the first area 201 is preset as the second area 202. The first area 201 and the second area 202 of the support layer 2 in this application are obtained through manual division, and there is no substantial division interface between the first area 201 and the second area 202 of the support layer 2 in this application. For example, still refer to FIG. 12. The first area 201 is a middle area of the support layer 2, the second area 202 surrounds a periphery of the first area 201, and the second area 202 is an edge area of the support layer 2.

In some embodiments, an orthographic projection area of the first area 201 on the flexible layer 1 is equal to an orthographic projection area of the reinforcement plate 22 on the flexible layer 1. In another embodiment, an orthographic projection area of the first area 201 on the flexible layer 1 is greater than an orthographic projection area of the reinforcement plate 22 on the flexible layer 1.

Still refer to FIG. 8 and FIG. 12. The support layer 2 includes a fiberglass substrate 21 and a reinforcement plate 22 disposed on one side of the fiberglass substrate 21. That is, the cover plate 10 includes the flexible layer 1, the fiberglass substrate 21, and the reinforcement plate 22. The flexible layer 1 and the reinforcement plate 22 are respectively disposed on two sides of the fiberglass substrate 21. The fiberglass substrate 21 corresponds to the first area 201 and the second area 202, and the reinforcement plate 22 corresponds to only the first area 201. In this way, the reinforcement plate 22 is disposed on the fiberglass substrate 21 in a local thickening manner, and impact resistance strength of the reinforcement plate 22 is greater than or equal to 100 Kg/cm, so that impact resistance strength of the support layer 2 can be improved. Further, during hot press bonding performed on the flexible layer 1 and the support layer 2 with the reinforcement plate 22, local stress generated by the locally thickened reinforcement plate 22 on the flexible layer 1 is reduced, and a possibility of an indentation occurring on a surface of the flexible layer 1 is reduced, so that appearance quality of the cover plate 10 is improved.

Specifically, the fiberglass substrate 21 includes fiberglass woven fabric and resin wrapping the fiberglass woven fabric. A density of the fiberglass woven fabric may be 0.5 g/cm³ to 2.8 g/cm³. For example, when the fiberglass woven fabric whose density is 1.8 g/cm³ is used, a mass percentage of the fiberglass woven fabric in the fiberglass substrate 21 is 50% to 60%; or when fiberglass woven fabric whose density is 0.8 g/cm³ is used, a mass percentage of the fiberglass woven fabric in the fiberglass substrate 21 is 30% to 40%. It should be noted that fiberglass is an inorganic nonmetallic material, and has advantages of good insulation, high heat resistance, good corrosion resistance, high mechanical strength, and the like. A fiberglass base material is coated with resin to form fiberglass prepreg, and the fiberglass prepreg is punched into sheets of a preset size of the cover plate, to obtain fiberglass sublayers 211. At least two fiberglass sublayers 211 are stacked and hot-pressed, to obtain the fiberglass substrate 21. In some embodiments, two to six fiberglass sublayers 211 are usually stacked and hot-pressed to obtain the fiberglass substrate 21. For example, FIG. 13 shows a fiberglass substrate 21 including four fiberglass sublayers 211. Then, the reinforcement plate 22 is disposed on one side of the fiberglass substrate 21, to obtain the support layer 2.

A thickness of the fiberglass substrate 21 is 0.1 mm to 0.5 mm. An excessively large thickness of the fiberglass substrate 21 is not conducive to lightness and thinness of the cover plate 10, and a small thickness of the fiberglass substrate 21 is not conducive to an increase in mechanical strength of the cover plate 10.

The reinforcement plate 22 may be a polyimide (Polyimide Film, PI) layer. Polyimide has excellent thermal stability, mechanical toughness, and chemical resistance, and can be used to reduce local stress acting on the flexible layer 1 in a hot press bonding process of the support layer 2 and the flexible layer 1, reduce a possibility of an indentation generated on the flexible layer 1, so that aesthetics of the cover plate 10 is improved.

The reinforcement plate 22 may alternatively be a polyethylene layer whose molecular weight is greater than or equal to 1.5 million. Polyethylene whose molecular weight is greater than or equal to 1.5 million is ultra-high molecular weight polyethylene. A larger molecular weight of polyethylene indicates better physical and mechanical properties of polyethylene. This helps reduce a local force exerted by the reinforcement plate 22 on the flexible layer 1 in the hot press bonding process. An excessively small molecular weight of polyethylene indicates poor impact resistance strength of polyethylene, and consequently, an indentation is prone to being generated on the surface of the flexible layer 1 in a procedure of performing hot press bonding on the support layer 2 and the flexible layer 1.

Refer to FIG. 8. The cover plate 10 further includes a protective film 3. The protective film 3 is disposed on the outer surface of the cover plate 10, that is, the protective film 3 is disposed on a surface on a side that is of the flexible layer 1 and that is away from the support layer 2. The protective film 3 may be, for example, a polyurethane film. The polyurethane film has good antistatic effect, has high surface cleanliness, and has high temperature resistance and high humidity resistance, to better protect the cover plate.

A thickness of the protective film 3 ranges from 10 µm to 30 µm, and may be specifically 10 µm, 13 µm, 15 µm, 18 µm, 22 µm, 25 µm, 28 µm, 30 µm, or the like. This is not limited herein. Within the foregoing range, the protective film 3 protects the cover plate 10 while ensuring lightness and thinness of the cover plate 10.

The cover plate 10 in this embodiment may be prepared by using the following preparation process.
(1) The flexible layer 1 is cut into a first preset shape. It may be understood that a size of the first preset shape corresponds to a preset size of the cover plate 10.
(2) The reinforcement plate 22 is cut into a second preset shape. It may be understood that a size of the second preset shape is a size required for local reinforcement on the cover plate 10.
(3) Fiberglass is woven and then pre-impregnated in the resin, to prepare the fiberglass prepreg, the fiberglass prepreg is punched into fiberglass sublayers 211 of a preset size of the cover plate 10, and finally, the plurality of fiberglass sublayers 211 are stacked and placed into a mold for hot pressing molding, to obtain the fiberglass substrate 21. The fiberglass substrate 21 includes the woven fiberglass (not shown in the accompanying drawings) and the resin (not shown in the accompanying drawings) wrapping the fiberglass.
(4) An optical adhesive is coated on a surface on a side of the cut reinforcement plate 22, and the reinforcement plate 22 with the optical adhesive is attached to the one side of the fiberglass substrate 21, so that an adhesive layer (not shown in the accompanying drawings) is formed between the reinforcement plate 22 and the fiberglass substrate 21. Finally, the cut flexible layer 1 is disposed on the other side of the fiberglass substrate 21, and hot press bonding is performed, to obtain the cover plate 10. Alternatively, the cut flexible layer 1 is disposed on one side of the fiberglass substrate 21, and hot press bonding is performed, to combine the flexible layer 1 and the fiberglass substrate 21; the optical adhesive is coated on the surface on the side of the cut reinforcement plate 22, and the reinforcement plate 22 with the optical adhesive is attached to the other side of the fiberglass substrate 21, to obtain the cover plate 10.

It may be understood that the optical adhesive is organic silicone resin, polyurethane resin, polyacrylate resin, epoxy resin, or the like.

In some embodiments, a thickness of the adhesive layer ranges from 0.005 mm to 0.02 mm, and may be specifically 0.005 mm, 0.008 mm, 0.01 mm, 0.013 mm, 0.016 mm, 0.018 mm, 0.02 mm, or the like.

It may be understood that a cover plate preparation process in this application does not constitute a limitation on a sequence of the foregoing steps. For example, a sequence of the step (2) and the step (3) is interchangeable, and a person skilled in the art may adjust the sequence.

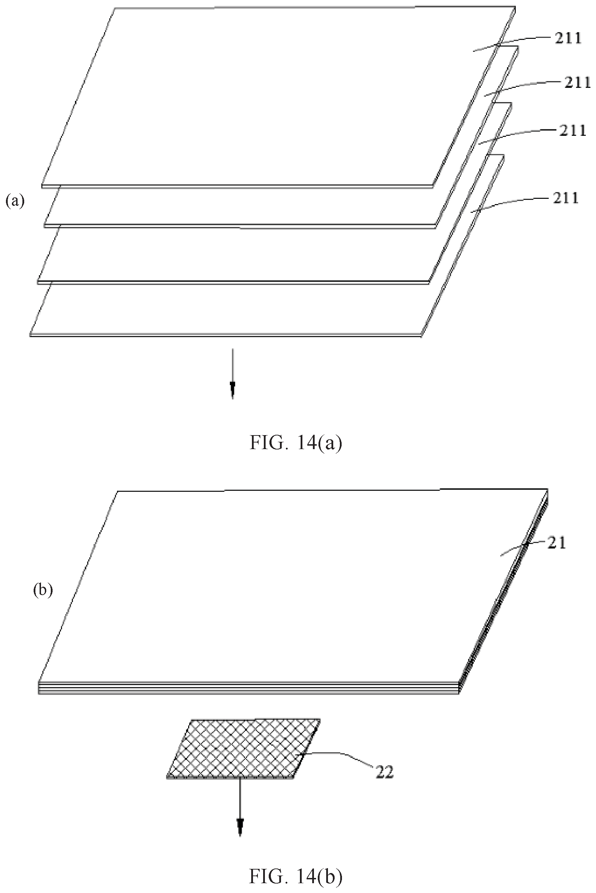

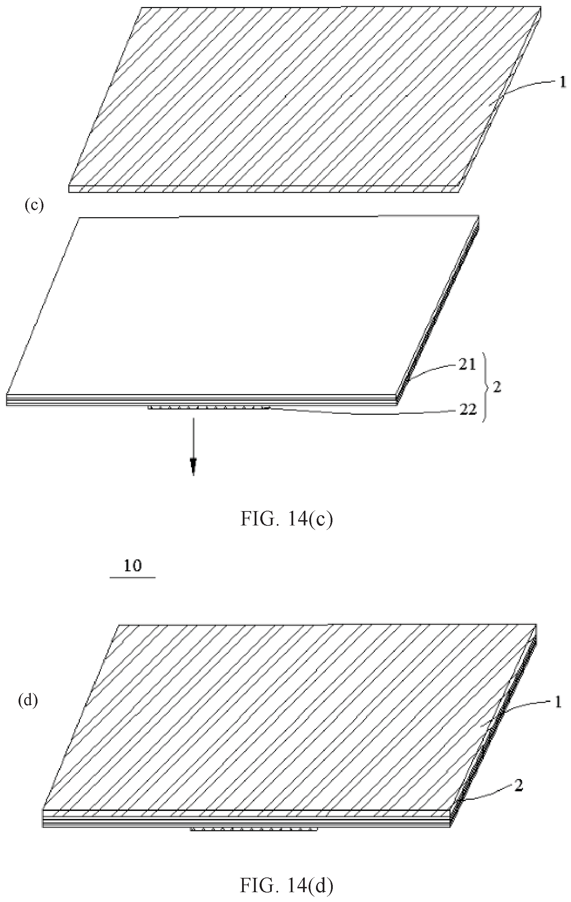

In a feasible implementation, FIG. 14(a) to FIG. 14(d) are a flowchart of preparing the cover plate 10 prepared by using four fiberglass sublayers 211. The flowchart specifically includes the following steps.
S1: Impregnate fiberglass fabric with a thickness of 0.1 mm in epoxy resin glue to prepare the fiberglass prepreg, punch the fiberglass prepreg into fiberglass sublayers 211 of the correspondingly preset size of the cover plate 10, and as shown in FIG. 14(a) and FIG. 14(b), place the four fiberglass sublayers 211 into a hot press mold for hot press for 5 minutes to 10 minutes at 180°C, to obtain the fiberglass substrate 21;
S2: as shown in FIG. 14(b) and FIG. 14(c), coat the optical adhesive (not shown in the accompanying drawings) on the surface on the side of the polyimide reinforcement plate 22 whose size is pre-cut and whose thickness is 0.05 mm, and attach the reinforcement plate 22 with the optical adhesive to the side of the fiberglass substrate 21, to obtain the support layer 2; and
S3: as shown in FIG. 14(c) and FIG. 14(d), dispose, on the other side of the support layer 2, the flexible layer 1 whose size is pre-cut and whose thickness is 0.1 mm, and perform hot pressing, to obtain the cover plate 10.

A puncture test is performed on the prepared cover plate 10. Specific test steps are described below.

A puncture tester is used to perform measurement according to the puncture test standard GB/T10004-2008. Specifically, the cover plate 10 with the reinforcement plate 22 is cut into a square test piece with a diameter of 100 mm and installed on a fixture; then, a steel needle with a diameter of 1.0 mm and a spherical top radius of 0.5 mm is used to puncture the test piece at a speed of (50±5) mm/min, where a puncture direction is a direction from an inner surface of the cover plate 10 to the outer surface of the cover plate 10; and a maximum load of the steel needle puncturing the test piece is read. There are ten test pieces, and an arithmetic average value of the test pieces is used as a puncture force. According to the test, a puncture force of the cover plate 10 prepared in Embodiment 1 is 100 N.

According to the cover plate provided in Embodiment 1 of this application, based on the fiberglass substrate 21, the flexible layer 1 is formed on an outer surface of the fiberglass substrate 21, the polyimide reinforcement plate 22 with the impact resistance strength greater than or equal to 100 Kg/cm is disposed on an inner surface of the fiberglass substrate 21, and the polyimide reinforcement plate 22 is disposed in only the first area 201. In this application, the locally thickened polyimide reinforcement plate 22 can protect an internal component of the electronic device while improving visual aesthetics of the cover plate, so that the cover plate can have advantages of drop resistance, wear resistance, and lightness and thinness. Compared with the cover plate prepared by directly using the fiberglass substrate 21 for local thickening in the conventional technology, uneven local stress is not generated on the surface of the flexible layer 1 during preparation of the cover plate in this application, so that generation of an indentation on the outer surface of the flexible layer 1 is reduced.

### Embodiment 2

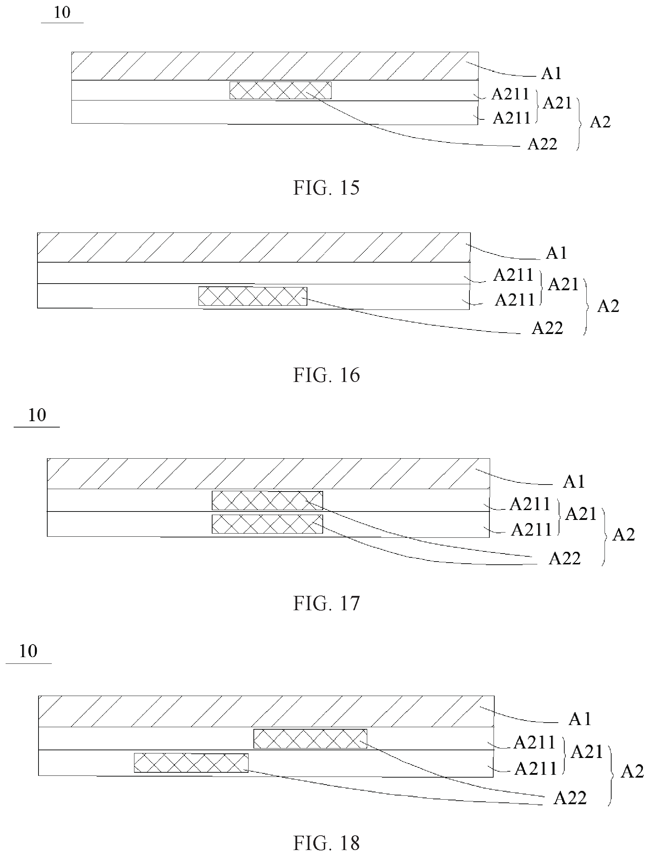

FIG. 15 is a diagram of a structure of the cover plate 10 according to Embodiment 2 of this application. A difference from Embodiment 1 lies in that the cover plate 10 includes a flexible layer A1 and a support layer A2 that are stacked, the support layer A2 includes a fiberglass substrate A21 and a reinforcement plate A22, the fiberglass substrate A21 includes at least two fiberglass sublayers A211 that are stacked, the reinforcement plate A22 is embedded in any one of the fiberglass sublayers A211, and impact resistance strength of the reinforcement plate A22 is greater than or equal to 100 Kg/cm.

For example, as shown in FIG. 15, the fiberglass substrate A21 includes the two fiberglass sublayers A211. FIG. 15 shows only that the reinforcement plate A22 is embedded in a fiberglass sublayer that is in contact with the flexible layer A1. Certainly, as shown in FIG. 16, the reinforcement plate A22 may alternatively be embedded in a fiberglass sublayer A211 that is not in contact with the flexible layer A1. As shown in FIG. 17 and FIG. 18, the reinforcement plate A22 may alternatively be embedded in each of the two fiberglass sublayers A211. As shown in FIG. 17, orthographic projections of the two reinforcement plates A22 on the flexible layer A1 completely overlap. As shown in FIG. 18, orthographic projections of the two reinforcement plates A22 on the flexible layer A1 completely do not overlap. Certainly, the fiberglass substrate A21 may alternatively include three fiberglass sublayers A211, four fiberglass sublayers A211, five fiberglass sublayers A211, or the like, and a location of the reinforcement plate A22 in the fiberglass substrate A21 is not limited. A person skilled in the art may make a proper selection based on a performance requirement of the cover plate 10. It may be understood that, in this embodiment, both an outer surface and an inner surface of the support layer 2 are flat surfaces.

In a preparation process of the cover plate 10 in this application, the support layer A2 with the reinforcement plate A22 is first prepared, and then the support layer A2 and the flexible layer A1 are combined by using a hot press bonding process, to obtain the cover plate. In this application, the inner surface of the support layer A2 is the flat surface, and the support layer A2 does not have a local thickening design shown in Embodiment 1. In the hot press bonding process of the support layer A2 and the flexible layer A1, the support layer A2 does not generate local stress on the flexible layer A1. This avoids an indentation occurring on a surface of the flexible layer A1, thereby ensuring appearance quality of the surface of the flexible layer A1.

The cover plate 10 in this embodiment may be prepared by using the following preparation process.
(1) The flexible layer A1 is cut into a first preset shape. It may be understood that a size of the first preset shape corresponds to a preset size of the cover plate 10.
(2) The reinforcement plate A22 is cut into a second preset shape. It may be understood that a size of the second preset shape is a size required for local reinforcement on the cover plate 10.
(3) Fiberglass is woven and then pre-impregnated in resin, to prepare fiberglass prepreg, and the fiberglass prepreg is punched into a plurality of sheets of a preset size of the cover plate, to obtain a plurality of fiberglass sublayers A211.

A thickness of the fiberglass sublayer A211 may be 0.05 mm to 0.3 mm, and may be specifically 0.05 mm, 0.1 mm, 0.2 mm, or 0.3 mm, or the like. This is not limited herein. An excessively large thickness of the fiberglass sublayer A211 is not conducive to lightness and thinness of the cover plate, and an excessively small thickness of the fiberglass sublayer A211 is not conducive to an increase in mechanical strength of the cover plate.

(4) The reinforcement plate A22 is embedded in any one of the fiberglass sublayers A211, and the fiberglass sublayer A211 with the reinforcement plate A22 and other fiberglass sublayers A211 are stacked and then placed into a mold for hot press molding, to obtain the support layer A2.

In the step (4), embedding the reinforcement plate 22 in any one of the fiberglass sublayers 211 includes: first selecting one fiberglass sublayer A211, forming a corresponding groove on the fiberglass sublayer A211 based on a shape of the reinforcement plate A22, and then placing the reinforcement plate A22 into the groove, to obtain the fiberglass sublayer A211 with the reinforcement plate A22.

In the step (4), there may be one or more reinforcement plates A22. A maximum quantity of reinforcement plates A22 does not exceed a quantity of fiberglass sublayers 211.

(5) The support layer A2 and the flexible layer A1 are stacked, and then hot press bonding is preformed, to obtain the cover plate 10.

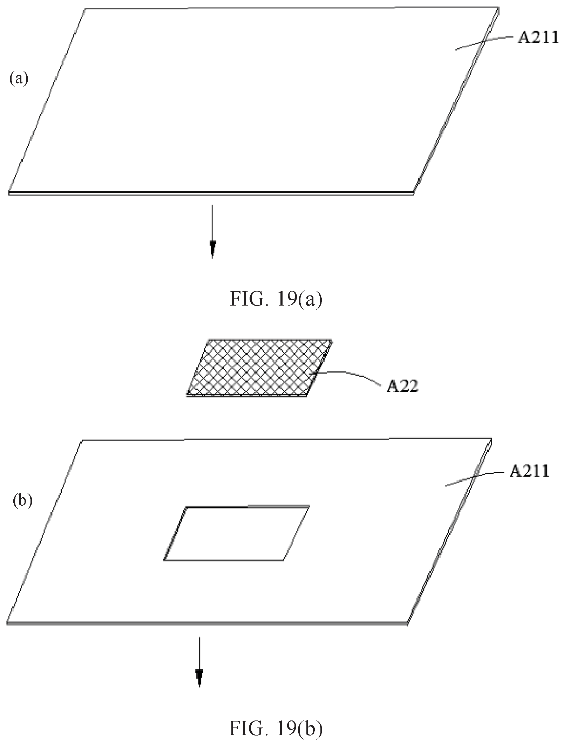

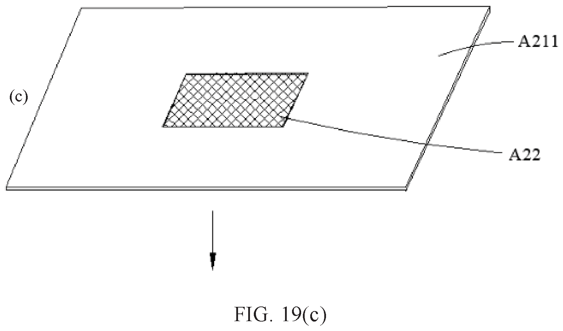

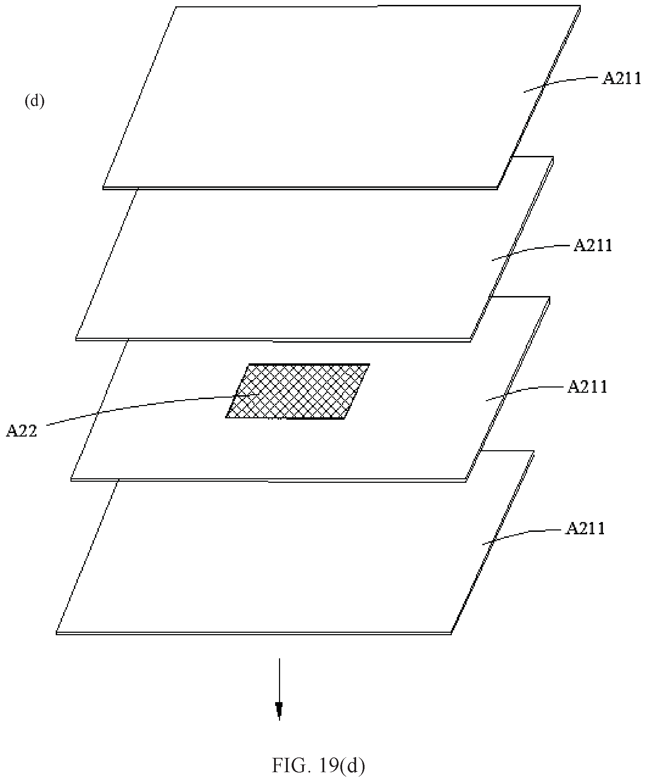

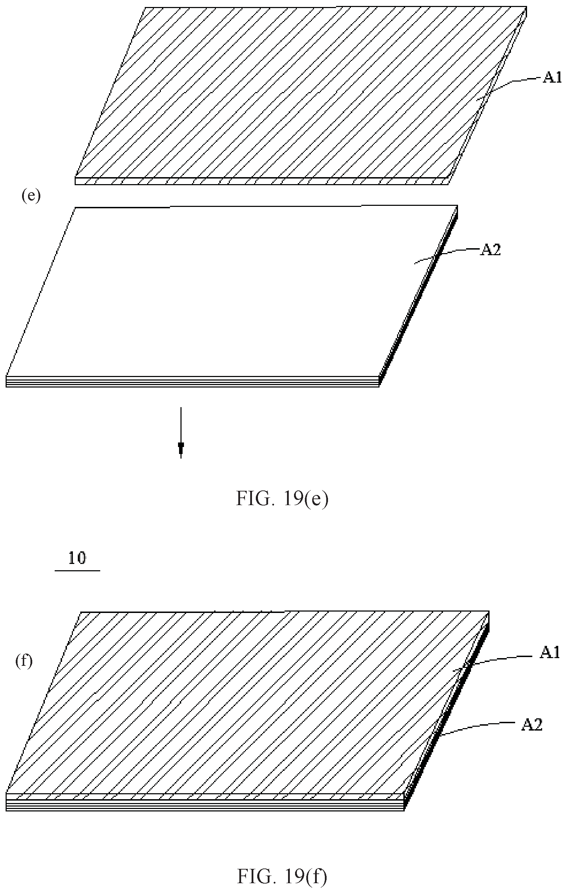

In a feasible implementation, FIG. 19(a) to FIG. 19(f) are a flowchart of preparing the cover plate prepared by using four fiberglass sublayers 211. The flowchart specifically includes the following steps.
S1: Impregnate fiberglass fabric with a thickness of 0.1 mm in epoxy resin glue to prepare the fiberglass prepreg, and then punch the fiberglass prepreg into four sheets of a correspondingly preset size of the cover plate, namely, four fiberglass sublayers A211; and
S2: as shown in FIG. 19(a) and FIG. 19(b), take out any one of the fiberglass sublayers A211, and groove the fiberglass sublayer A211 based on a size of the pre-cut reinforcement plate A22;
S3: as shown in FIG. 19(b) and FIG. 19(c), place the polyimide reinforcement plate A22 with a thickness of 0.1 mm into a groove of the fiberglass sublayer A211, and selectively fill a small amount of epoxy resin in a gap of the fiberglass sublayer A211, so that a surface of the fiberglass sublayer A211 is flush;
S4: as shown in FIG. 19(d) and FIG. 19(e), stack the fiberglass sublayer A211 with the polyimide reinforcement plate A22 and other fiberglass sublayers A221, and then place the fiberglass sublayers A211 into a hot pressing mold for hot pressing for 5 minutes to 10 minutes at 180°C, to obtain the support layer A2, where the fiberglass sublayer A211 with the polyimide reinforcement plate A22 is located in the middle; and
S5: as shown in FIG. 19(e) and FIG. 19(f), dispose, on one side of the support layer 2, the pre-cut polyurethane flexible layer A1 whose thickness is 0.1 mm, and perform hot pressing, to obtain the cover plate 10.

A puncture test is performed on the foregoing prepared cover plate 10. Specific test steps are the same as those in Embodiment 1. According to the test, a puncture force of the cover plate 10 is 140 N.

According to the cover plate 10 provided in Embodiment 2 of this application, based on the fiberglass substrate A21, the flexible layer A1 is formed on an outer surface of the fiberglass substrate A21, and the reinforcement plate A22 with the impact resistance strength greater than or equal to 100 Kg/cm is embedded in the fiberglass substrate A21. In this way, in a procedure of laminating the fiberglass substrate A21 and the flexible layer A1, the fiberglass substrate A21 with the reinforcement plate A22 does not generate local stress on the flexible layer A1, to ensure that the cover plate A10 is light and thin and has mechanical strength, and avoid an indentation occurring on the outer surface of the cover plate 10.

### Embodiment 3

A difference from Embodiment 1 lies in that the cover plate 10 includes a flexible layer B1 and a support layer B2' that are stacked, the support layer B2' includes a fiberglass substrate B21 and a reinforcement layer B22, the fiberglass substrate B21 includes at least two fiberglass sublayers B211 that are stacked, there are at least two reinforcement plates B22, one reinforcement plate B22 is disposed on one side of the support layer B2, and other reinforcement plates B22 are embedded in the fiberglass sublayers B211. There is one reinforcement plate B22 disposed on the support layer B2, and there may be a plurality of reinforcement plates B22 embedded in the fiberglass sublayers B211. A maximum of one reinforcement plate is embedded in each fiberglass sublayer B211, to improve impact resistance of the cover plate 10 while avoiding an excessively large thickness of the cover plate 10.

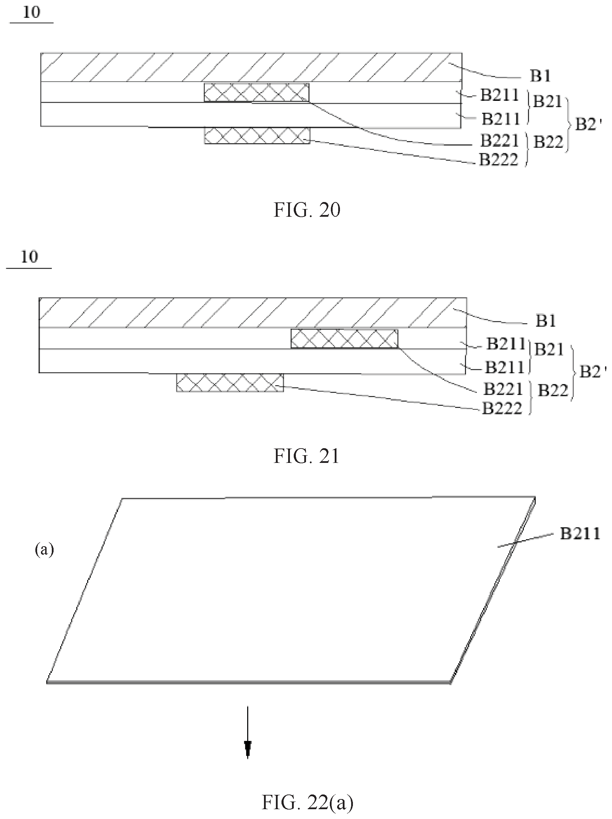

The following uses an example in which the support layer 2' includes two layers of fiberglass substrates B21 and two reinforcement plates B22 for description. FIG. 20 is a diagram of a structure of the cover plate 10 according to Embodiment 3 of this application. The cover plate 10 includes a flexible layer B1 and a support layer B2' that are stacked. The support layer B2' includes a fiberglass substrate B21 and a reinforcement layer B22. The fiberglass substrate B21 includes two fiberglass sublayers B211 that are stacked. The reinforcement plate B22 includes a first reinforcement plate B221 and a second reinforcement plate B222. The first reinforcement plate B221 is embedded in the fiberglass sublayer B211 that is in contact with the flexible layer B1, and the second reinforcement plate B222 is disposed on a side that is of the support layer B2' and that is away from the flexible layer B1.

The first reinforcement plate B221 is selected from a polyimide layer or a polyethylene layer whose molecular weight is greater than or equal to 1.5 million. The second reinforcement plate B222 is selected from a polyimide layer or a polyethylene layer whose molecular weight is greater than or equal to 1.5 million. Still refer to FIG. 20. An orthographic projection of the first reinforcement plate B221 on the flexible layer B1 may completely overlap an orthographic projection of the second reinforcement plate B222 on the flexible layer 1. Certainly, refer to FIG. 21. An orthographic projection of the first reinforcement plate B221 on the flexible layer B1 completely does not overlap an orthographic projection of the second reinforcement plate B222 on the flexible layer B1. In this way, existence of the first reinforcement plate B221 and the second reinforcement plate B222 can reinforce the fiberglass substrate B21, to improve mechanical performance of the support layer B2'; and can avoid unevenly distributed local stress on the flexible layer B1 in a procedure of press-fitting the flexible layer B1 and the support layer B2', to improve appearance quality of the cover plate 10.

In a preparation process of the cover plate 10 in this application, the support layer B2' with the reinforcement plate B22 is first prepared, and then the support layer B2' and the flexible layer B1 are combined by using a hot press bonding process, to obtain the cover plate.

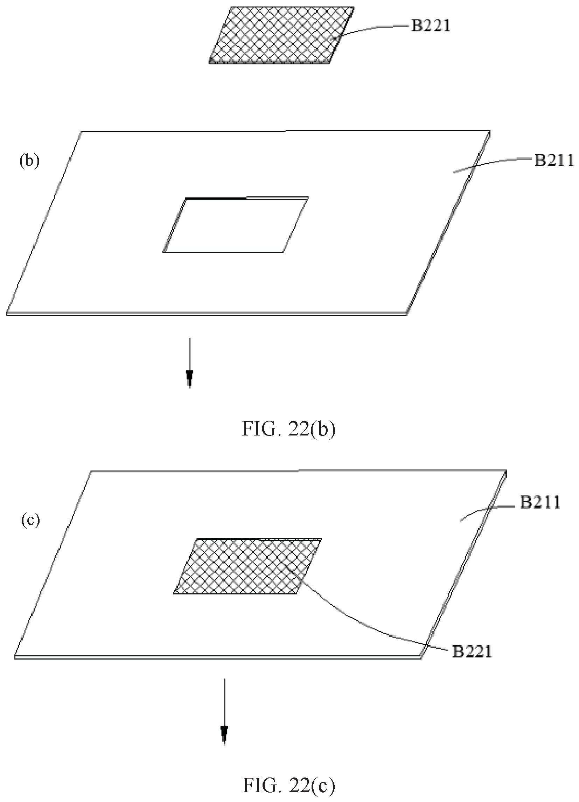

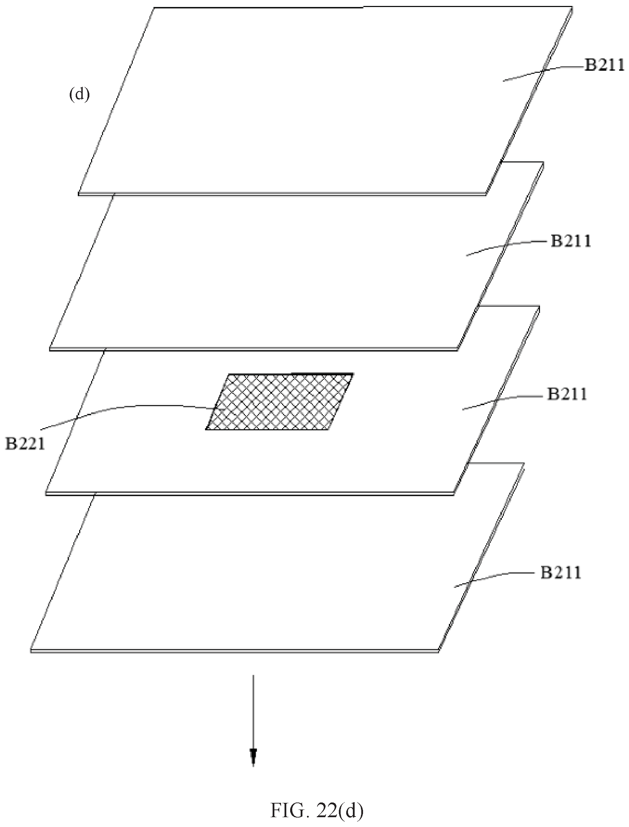

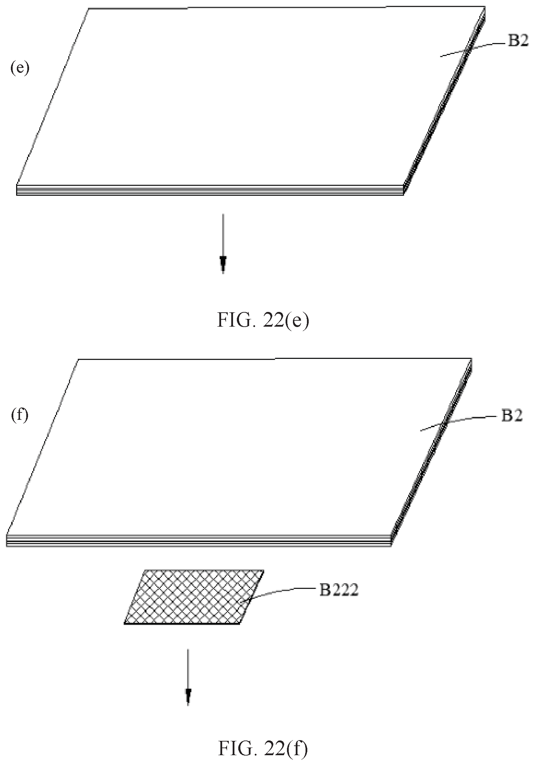

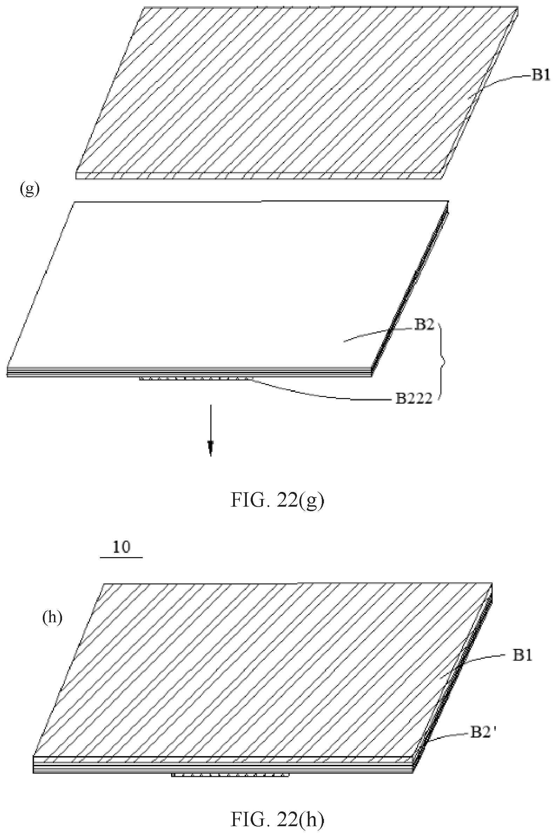

In a feasible implementation, FIG. 22(a) to FIG. 22(h) are a flowchart of preparing the cover plate 10 prepared by using four fiberglass sublayers B211. The flowchart specifically includes the following steps.
S1: Impregnate fiberglass fabric with a thickness of 0.1 mm in epoxy resin glue to prepare the fiberglass prepreg, and then punch the fiberglass prepreg into four sheets of a correspondingly preset size of the cover plate, namely, four fiberglass sublayers B211; and
S2: as shown in FIG. 22(a) and FIG. 22(b), take out any one of the fiberglass sublayers B211, and groove the fiberglass sublayer B211 based on a size of the pre-cut reinforcement plate B22;
S3: as shown in FIG. 22(b) and FIG. 22(c), place the first reinforcement plate B221 (polyimide) with a thickness of 0.1 mm into a groove of the fiberglass sublayer B211, and selectively fill a small amount of epoxy resin in a gap of the fiberglass sublayer B211, so that a surface of the fiberglass sublayer B211 is flush;
S4: as shown in FIG. 22(d) and FIG. 22(e), stack the fiberglass sublayer B211 with the polyimide reinforcement plate B22 and other fiberglass sublayers B211, and then place the fiberglass sublayers B211 into a hot pressing mold for hot pressing for 5 minutes to 10 minutes at 180°C, to obtain the support layer B2, where the fiberglass sublayer B211 with the polyimide reinforcement plate B22 is located in the middle;
S5: as shown in FIG. 22(f) and FIG. 22(g), coat an optical adhesive on a surface on one side of the second reinforcement plate B222 (polyimide) with a thickness of 0.1 mm, and attach the second reinforcement plate B222 with the optical adhesive to one side of the support layer B2, to obtain the support layer B2'; and
S6: as shown in FIG. 22(h), dispose, on one side of the support layer B2', the pre-cut polyurethane flexible layer B1 whose thickness is 0.1 mm, and perform hot pressing, to obtain the cover plate 10.

According to the cover plate 10 provided in Embodiment 3 of this application, based on the fiberglass substrate B21, the flexible layer B1 is formed on an outer surface of the fiberglass substrate B21, and the reinforcement plate B22 with impact resistance strength greater than or equal to 100 Kg/cm is embedded in the fiberglass substrate B21. The reinforcement plate B22 with the impact resistance strength greater than or equal to 100 Kg/cm is disposed on an inner surface of the fiberglass substrate B21. In this way, in a procedure of laminating of the fiberglass substrate B21 and the flexible layer B1, existence of the reinforcement plate B22 almost does not generate local stress on the flexible layer B1, to ensure that the cover plate is light and thin and has mechanical strength, and reducing an indentation occurring on the outer surface of the cover plate.

### Comparative example 1

The fiberglass fabric with the thickness of 0.1 mm is impregnated in the epoxy resin glue to prepare the fiberglass prepreg, and the fiberglass prepreg is punched into sheets of the correspondingly preset size of the cover plate; four layers of sheets are stacked and placed into a hot pressing mold, and hot pressing is performed for 5 minutes to 10 minutes at 180°C, to obtain the fiberglass substrate; and then, a polyurethane layer with a thickness of 0.05 mm is bonded to a surface on another side of the fiberglass substrate by using the hot press bonding process, to obtain the cover plate.

According to the test, a puncture force of the cover plate prepared in Embodiment 1 is 90 N.

### Comparative example 2

The fiberglass fabric with the thickness of 0.1 mm is impregnated in the epoxy resin glue to prepare the fiberglass prepreg, and the fiberglass prepreg is punched into sheets of the correspondingly preset size of the cover plate; five layers of sheets are stacked and placed into a hot pressing mold, and hot pressing is performed for 5 minutes to 10 minutes at 180°C; an obtained sheet is taken out, and partial cutting is performed on a surface on one side of the obtained sheet, so that a thickness of a middle area is greater than a thickness of an edge area, and a thickness difference between the thickness of the middle area and the thickness of the edge area is 0.05 mm, to obtain the support layer; and then, a polyurethane layer with a thickness of 0.05 mm is bonded to a surface on another side of the support layer by using the hot press bonding process, to obtain the cover plate.

According to the test, a puncture force of the cover plate prepared in Comparative example 2 is 100 N, and an indentation occurs on an outer surface of the cover plate.

Although this application is disclosed above in preferred embodiments, this is not intended to limit the claims. Any person skilled in the art may make several possible changes and modifications without departing from the concept of this application. Therefore, the protection scope of this application should be subject to the scope defined by the claims of this application.

## Claims

1. A cover plate, wherein the cover plate comprises:
a support layer, wherein the support layer has a first area and a second area, the first area and the second area are disposed adjacent to each other, the support layer corresponding to the first area comprises at least a reinforcement plate, and impact resistance strength of the reinforcement plate is greater than or equal to 100 Kg/cm; and
a flexible layer, wherein the flexible layer is disposed on an outer surface of the support layer.

2. The cover plate according to claim 1, wherein the support layer further comprises a fiberglass substrate, the fiberglass substrate corresponds to the first area and the second area, a thickness of the support layer corresponding to the first area is greater than a thickness of the support layer corresponding to the second area, and the reinforcement plate is located on a side that is of the fiberglass substrate and that is away from the flexible layer.

3. The cover plate according to claim 2, wherein a bonding layer is further disposed between the reinforcement plate and the fiberglass substrate.

4. The cover plate according to claim 1, wherein the support layer further comprises a fiberglass substrate, the fiberglass substrate corresponds to the first area and the second area, the fiberglass substrate comprises at least two fiberglass sublayers that are stacked, the reinforcement plate is embedded in any one of the fiberglass sublayers, and a thickness of the support layer corresponding to the first area is equal to a thickness of the support layer corresponding to the second area.

5. The cover plate according to claim 4, wherein there is at least one reinforcement plate, and a maximum of one reinforcement plate is embedded in the any one of the fiberglass sublayers.

6. The cover plate according to any one of claims 1 to 3, wherein the fiberglass substrate comprises at least two fiberglass sublayers that are stacked, the reinforcement plate comprises a first reinforcement plate and a second reinforcement plate, the first reinforcement plate is embedded in any one of the fiberglass sublayers, and the second reinforcement plate is located on the side that is of the fiberglass substrate and that is away from the flexible layer.

7. The cover plate according to claim 6, wherein there is at least one first reinforcement plate, and a maximum of one reinforcement plate is embedded in the any one of the fiberglass sublayers; and there is one second reinforcement plate.

8. The cover plate according to any one of claims 1 to 7, wherein the reinforcement plate is selected from a polyimide layer or a polyethylene layer, and a molecular weight of polyethylene in the polyethylene layer is greater than or equal to 1.5 million.

9. The cover plate according to any one of claims 1 to 8, wherein a thickness of the reinforcement plate ranges from 0.02 mm to 0.1 mm.

10. The cover plate according to any one of claims 1 to 9, wherein a thickness of the cover plate corresponding to the first area is less than or equal to 0.8 mm.

11. The cover plate according to any one of claims 1 to 10, wherein a thickness of the cover plate corresponding to the second area is less than or equal to 0.7 mm.

12. The cover plate according to any one of claims 1 to 11, wherein the flexible layer is selected from a polyurethane layer.

13. The cover plate according to any one of claims 1 to 12, wherein the flexible layer comprises at least one protective layer, the protective layer comprises a first layer and a second layer that are stacked, the first layer is disposed between the second layer and the support layer, the first layer is selected from an acrylic layer, and the second layer is selected from the polyurethane layer.

14. The cover plate according to any one of claims 1 to 13, wherein the cover plate further comprises a protective film, the protective film is disposed on a side that is of the flexible layer and that is away from the support layer, and the protective film is selected from a polyurethane film.

15. An electronic device, wherein the electronic device comprises a housing and a cover plate covering a surface of the housing, and the cover plate comprises the cover plate according to any one of claims 1 to 14.
